# EUROPÄISCHE PATENTANMELDUNG

(11) **EP 1 604 727 A1**
(43) Veröffentlichungstag der Anmeldung: **14.12.2005**
(21) Anmeldenummer: 05011566.6
(22) Anmeldetag: 30.05.2005
(51) Int. Cl.: B01D 53/85

(54) **Verfahren zur Entfernung von Schwefelhaltigen Verbindungen aus Biogas**

(30) Priorität: 04.06.2004 DE 102004027442
(71) Anmelder: Applikations- und Technikzentrum für Energieverfahrens-, Umwelt- und Strömungstechnik (ATZ-EVUS), 92237 Sulzbach-Rosenberg (DE)
(72) Erfinder: Schneider, Ralf Dipl.-Ing., 91207 Lauf (DE); Anzer, Tobias Dipl.-Ing., 92507 Nabburg (DE); Huber, Harald Dr., 93345 Hausen (DE)
(74) Vertreter: Gassner, Wolfgang

(57) **Zusammenfassung**

Die Erfindung betrifft ein Verfahren zur Entfernung von schwefelhaltigen Verbindungen aus Biogas, bei dem das Biogas durch einen mit halotoleranten Mikroorganismen besiedelten Trägerkörper (2) geführt und der in den schwefelhaltigen Verbindungen enthaltene Schwefel zumindest teilweise durch die Mikroorganismen überwiegend zu elementarem Schwefel (5) oxidiert wird. Zur Erhöhung der Effizienz des Verfahrens wird erfindungsgemäß vorgeschlagen, dass der Trägerkörper (2) zum Abführen des elementaren Schwefels (5) mit einer wässrigen, Eisenionen enthaltenen Lösung (4) gespült wird.

## Beschreibung

Die Erfindung betrifft ein Verfahren zur Entfernung von schwefelhaltigen Verbindungen aus Biogas nach dem Oberbegriff des Anspruchs 1.

Beim mikrobiologischen Abbau von Schwefelwasserstoff entstehen als Produkte elementarer Schwefel und Schwefelsäure. Bei Schwefelsäurebildung sinkt der pH-Wert ab. Dadurch finden die vorhandenen Mikroorganismen keine optimalen Bedingungen mehr vor, was zu einen Abfall in der Abbauleistung führt. Durch hohe Sulfatkonzentrationen (> 30 g/l) wird die Bildung von Schwefelsäure weitestgehend verhindert (Produktinhibierung) und der pH-Wert bleibt ohne erhöhten regeltechnischen Aufwand konstant.

Das Produkt Schwefel ist aus folgenden Gründen vorzuziehen, da:
- pH-Schwankungen ohne erhöhten regeltechnischen Aufwand vermieden werden und sich somit eine leistungsfähige, adaptierte Biozönose etablieren kann,
- der Verbrauch an Neutralisationsmitteln für die Beibehaltung eines konstanten pH-Werts reduziert wird,
- bei sehr niedrigen pH-Werten bedingt durch die Schwefelsäurebildung ein erhöhter Verschleiß durch Korrosion auftritt,

Ein zweistufiges Verfahren zur Entfernung von schwefelhaltigen Verbindungen aus Biogas ist aus C. Pagella, D. M. De Faveri; Chemical Engineering Science 55 (2000) 2185-2194 bekannt. Dabei wird in einem ersten Verfahrensschritt H₂S Gas durch eine in einem ersten Reaktor aufgenommene Lösung geleitet, welche Fe³⁺-Ionen enthält. Die Fe³⁺-Ionen werden dabei zu Fe²⁺-Ionen reduziert; der in H₂S enthaltene Schwefel wird zu elementarem Schwefel oxidiert. Die im ersten Reaktor verwendete Lösung wird zur Regeneration in einen zweiten Reaktor überführt. Mittels dort auf einem Trägerkörper aufgenommener geeigneter Mikroorganismen werden die in der Lösung enthaltenen Fe²⁺-Ionen wieder zu Fe³⁺-Ionen oxidiert. Die regenerierte Lösung wird dann vom zweiten Reaktor über eine Einrichtung zum Entfernen des elementaren Schwefels wieder in den ersten Reaktor zurückgeführt. - Das bekannte Verfahren erfordert einen hohen apparativen Aufwand und ist infolgedessen störanfällig. So kommt es beim Überführen der mit elementarem Schwefel beladenen Lösung vom ersten in den zweiten Reaktor mitunter zu einem Zusetzen einer zwischen beiden Reaktoren vorgesehenen Verbindungsleitung. Abgesehen davon ist es erforderlich, in den zweiten Reaktor Luft einzublasen, um ein Zusetzen des mit den Mikroorganismen besiedelten Trägerkörpers zu verhindern.

Aus der DE 40 04 040 A1 ist ein Verfahren zur mikrobiellen Abscheidung von gasförmigen organischen Schadstoffen, insbesondere Dichlormethan, aus Abluft bekannt. Ein weiteres Verfahren zur biologischen Reinigung von Abluft ist in der DE 42 32 992 A1 beschrieben. Dabei wird die Abluft zur Entfernung wasserunlöslicher Schadstoffe durch einen mit Mikroorganismen besiedelten Trägerkörper geleitet. Ein aus den Mikroorganismen gebildeter Biofilm wird dabei lediglich teilweise befeuchtet.

Die beiden vorgenannten Verfahren eignen sich nicht zur Entfernung von in Biogas enthaltenen Schwefelverbindungen.

Die DE 40 25 343 A1 offenbart ein weiteres Verfahren zur Reinigung von Abluft, die mit schwer wasserlöslichen Schadstoffen belastet ist. Zur Gewährleistung einer kontinuierlichen Verfahrensführung ist vorgesehen, dass mehrere Tropfkörper in Parallelschaltung phasenverschoben intermittierend befeuchtet werden. Das bekannte Verfahren eignet sich ebenfalls lediglich zur Reinigung von Abluft, nicht jedoch zur Entfernung von in Biogas enthaltenen schwefelhaltigen Verbindungen.

Aufgabe der Erfindung ist es, die Nachteile nach dem Stand der Technik zu beseitigen. Es soll insbesondere ein möglichst einfach und effizient durchführbares Verfahren zur Entfernung von schwefelhaltigen Verbindungen, insbesondere H₂S, aus Biogas angegeben werden.

Diese Aufgabe wird durch die Merkmale des Anspruchs 1 gelöst. Zweckmäßige Ausgestaltungen des Verfahrens ergeben sich aus den Merkmalen der Ansprüche 2 bis 11.

Nach Maßgabe der Erfindung ist vorgesehen, dass der Trägerkörper zum Abführen des elementaren Schwefels mit einer wässrigen, Eisen- und Sulfationen enthaltenden Lösung gespült wird. - Das ermöglicht eine erhebliche Vereinfachung des Verfahrens. Es kann in einem einzigen Reaktor durchgeführt werden, in dem ein mit Mikroorganismen besiedelter Träger- bzw. Tropfkörper aufgenommen ist. Durch das Spülen mit der wässrigen Lösung kann auf einfache Weise der von den Mikroorganismen produzierte elementare Schwefel entfernt werden. Indem der wässrigen Lösung Sulfationen zugesetzt sind, wird die Bildung von Schwefelsäure verhindert. Durch den gleichzeitigen Zusatz von Eisenionen wird eine kontinuierliche Oxidation schwefelhaltiger Verbindungen mittels der Mikroorganismen ermöglicht. Durch die Zugabe von Eisensalzen kann die Abbauleistung des biologischen Abbaus von Schwefelwasserstoff gesteigert werden, da viele Schwefelwasserstoff-oxidierende Bakterien chemoautotroph bzw. chemoheterotroph sind und auch zweiwertige Eisenionen oxidieren können. Es ergibt sich eine besonders einfache, kontinuierliche und damit effiziente Verfahrensführung.

Unter einem "halotoleranten Mikroorganismus" wird im Sinne der vorliegenden Erfindung ein Mikroorganismus verstanden, der in Lösungen mit Salzgehalten von > 25 g/l existieren kann. Es werden darunter insbesondere Mikroorganismen verstanden, die in Lösungen, die insbesondere Sulfat, Ammonium- und Eisenionen enthalten, existieren können und die Fähigkeit haben, reduzierte Schwefelverbindungen, wie H₂S oder Metallsulfide, zu hauptsächlich elementarem Schwefel zu oxidieren. Als halotolerante Mikroorganismen kann beispielsweise ein Mikroorganismus der Spezies "Thiobazillus", insbesondere *Thiobacillus ferrooxidans* (der Strang 9490 der National Collection of Industrial and Marine Bacteria, Scotland, der auch als ATCC 19859 kodiert ist) verwendet werden.

Unter dem Begriff "Biogas" wird vorliegend ein Gas mit einem Methangehalt von zumindest 30%, vorzugsweise von zumindest 50 bis 70%, verstanden. Eine weitere wesentliche Komponente des Gases ist Kohlendioxid, das üblicherweise in einer Menge von 20 bis 50% enthalten ist.

Unter "schwefelhaltigen Verbindungen" werden insbesondere anorganische schwefelhaltige Gase verstanden, z. B. H₂S, COS, welche bei einer Fermentation biogener Ausgangsstoffe gebildet werden. Insbesondere werden unter diesem Begriff Verbindungen verstanden, welche Schwefel in reduzierender Form enthalten (= reduzierte Schwefelverbindungen).

Zweckmäßigerweise wird als wässrige Lösung eine schwach saure Lösung mit einem pH-Wert < 6 verwendet. Weiter hat es sich als zweckmäßig erwiesen, eine wässrige Lösung zu verwenden, deren pH-Wert > 3,5 ist. In diesem Fall ist es zusätzlich möglich, Eisensulfid oder Eisendisulfid aus der Lösung zu fällen. Die gefällten Eisensulfidverbindungen können durch die Wirkung der halotoleranten Mikroorganismen zu elementarem Schwefel und Eisen 3⁺-Ionen oxidiert werden. Die sich dabei bildenden Fe³⁺-Ionen wirken als zusätzlicher Puffer, der zusätzlich eine kontinuierliche Verfahrensführung unterstützt. Damit können insbesondere Fluktuationen in der Konzentration der im Biogas enthaltenen Schwefelverbindungen kompensiert werden.

Nach einer weiteren Ausgestaltung ist vorgesehen, dass die wässrige Lösung auf einer Temperatur im Bereich von 20 bis 45°C gehalten wird. Als besonders vorteilhaft hat es sich erwiesen, die Temperatur der wässrigen Lösung in einem Bereich von 30 bis 40°C konstant zu halten. Damit wird eine besonders hohe Effizienz hinsichtlich der Entfernung von reduzierten Schwefelverbindungen aus dem Biogas erreicht.

Zweckmäßigerweise wird die wässrige Lösung im Kreislauf über den Trägerkörper geführt. Sie kann dazu beispielsweise aus einem unterhalb des Trägerkörpers befindlichen Sumpf entnommen und mittels einer Pumpe über eine Steigleitung oberhalb des Trägerkörpers freigegeben werden, so dass der Trägerkörper damit gespült wird. Vorteilhafterweise wird die wässrige Lösung im Gegenstrom zum Biogas geführt. Das Biogas tritt in diesem Fall zweckmäßigerweise in einem Bereich zwischen dem Sumpf und einer Unterseite des Trägerkörpers in den Reaktor ein, durchläuft den Trägerkörper in im Wesentlichen vertikaler Richtung nach oben und verlässt den Reaktor durch eine oberhalb des Trägerkörpers in der Reaktorwand vorgesehenen Durchbruch.

Als Trägerkörper können insbesondere aus Kunststoff hergestellte Trägerkörper verwendet werden. Solche Trägerkörper sind nach dem Stand der Technik allgemein bekannt. Als Kunststoffe kommen insbesondere Materialien in Betracht, die resistent gegen saure wässrige Lösungen sind.

Nach einer weiteren Ausgestaltung des Verfahrens ist vorgesehen, dass der Trägerkörper intermittierend gespült wird. Eine Leistung der zum Spülen verwendeten Pumpen ist dabei so gewählt, dass während eines Spülzykluses eine zum nahezu vollständigen Entfernen des elementaren Schwefels geeignete Menge an wässriger Lösung über den Trägerkörper geführt wird.

Biogas ist systemimanent mit Wasserdampf gesättigt. Das Biogas wird beim Durchtritt durch den Trägerkörper vorteilhafterweise abgekühlt. Infolgedessen kondensiert der Wasserdampf, wodurch die Mikroorganismen stets mit ausreichend Feuchtigkeit versorgt werden. Die Mikroorganismen bzw. ein daraus gebildeter Biofilm sind also ständig von einem Flüssigkeitsfilm umgeben.

Des Weiteren hat es sich als vorteilhaft erwiesen, dem Biogas vor dem Durchführen durch den Trägerkörper Luft oder Sauerstoff beizumischen. Das ist Voraussetzung für die Oxidation der Schwefelverbindungen zum elementaren Schwefel.

Nach einer weiteren Ausgestaltung ist vorgesehen, dass der elementare Schwefel aus der Lösung entfernt wird. Der elementare Schwefel setzt sich insbesondere am Boden des Reaktors im Sumpf ab. Er kann dort durch Öffnen einer eigens dafür vorgesehenen Entnahmeöffnung aus der Lösung entfernt werden.

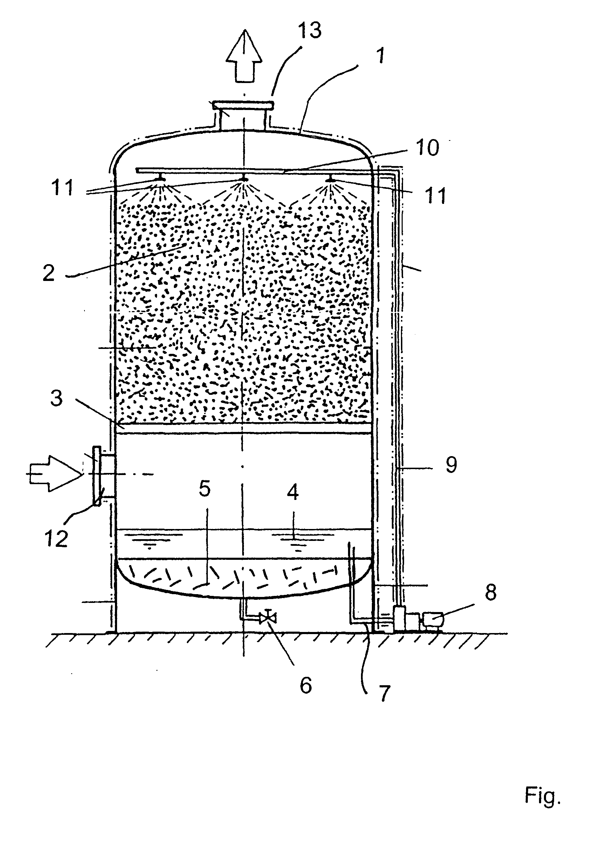

Nachfolgend wird ein Ausführungsbeispiel der Erfindung anhand der einzigen Zeichnung näher erläutert.

Die einzige Zeichnung zeigt eine Querschnittsansicht einer Vorrichtung zur Entfernung schwefelhaltiger Verbindungen aus Biogas.

In einem Reaktor 1 ist ein, beispielsweise aus gitterartigen Kunststoffelementen hergestellter, Trägerkörper 2 aufgenommen. Die durch den Trägerkörper 2 gebildeten Oberflächen sind mit einem aus halotoleranten Bakterien gebildeten Biofilm (hier nicht gezeigt) überzogen. Der Trägerkörper 2 ist auf geeigneten Stützelementen 3, die beispielsweise gitterartig ausgebildet sein können, abgestützt. Eine mit dem Bezugszeichen 4 bezeichnete wässrige Lösung steht in einem Sumpf des Reaktors 1. Am Boden des Sumpfs befindet sich mit dem Bezugszeichen 5 bezeichneter elementarer Schwefel. Eine etwa an der tiefsten Stelle des Bodens des Reaktors 1 vorgesehene Entnahmeleitung 6 ist mit einem Ventil versehen. Ferner mündet in den Sumpf eine Ansaugleitung 7, welche über eine Pumpe 8 mit einer Steigleitung 9 verbunden ist, die ihrerseits in eine oberhalb des Trägerkörpers 2 im Reaktor 1 mündende Ring- oder Verteilerleitung 10 führt. An der Ring- oder Verteilerleitung 10 sind mehrere Düsen 11 zum gleichmäßigen Beaufschlagen des Trägerkörpers 2 mit Lösung 4 vorgesehen. Im Bereich zwischen dem Sumpf und dem Trägerkörper 2 weist der Reaktor 1 eine Zuführöffnung 12 für das zu reinigende Biogas und oberhalb des Trägerkörpers 2 eine Abführöffnung 13 für das gereinigte Biogas auf.

### Die Funktion der Vorrichtung ist folgende:

Durch die Zuführöffnung 12 wird nahezu mit Wasserdampf gesättigtes Biogas dem Reaktor 1 zugeführt. Das Biogas ist mit gasförmigen anorganischen Schwefelverbindungen beladen. Es gelangt mit einer Temperatur von 35 bis 55°C in den Reaktor 1. Das Biogas durchläuft den Trägerkörper 2 und streicht dabei am Biofilm entlang und kühlt sich dabei ab. Es kondensiert Wasser an der Oberfläche des Biofilms. Im Biogas enthaltene Schwefelverbindungen, insbesondere gasförmiges H₂S werden an der Oberfläche des Biofilms entsprechend den folgenden biochemischen und chemischen Reaktionen zu elementarem Schwefel 5 oxidiert:

H₂S + Mikroorganismen + 0,5 O₂ -> S° + H₂O,

H₂S + 2 Fe³⁺ -> S° + 2 Fe²⁺ + 2 H⁺, 2Fe²⁺ + Mikroorganismen + 0,5 O₂ + H₂O-> 2Fe³⁺ + 2OH⁻

Der sich an der Oberfläche des Biofilms abscheidende elementare Schwefel S wird durch periodisches Spülen, z. B. mit einem von Spülintervall: 0,5 bis 4 h⁻¹ und einer Spülmenge: 1-10 m³/m²*h, des Trägerkörpers 2 mit der Lösung 4 in den Sumpf gespült und dort mittels der Abzugsleitung 6 periodisch abgezogen.

Zur Steigerung der Abbauleistung sind der Lösung 4 Eisenionen zugesetzt, z. B. werden ca. 30 1/m³ Eisen(II)Sulfatlösung mit ca. 20 Gew.% Eisen zugesetzt. Zweckmäßigerweise erfolgt die Eisenzugabe als Eisensulfat (FeSO₄ bzw. Fe₂(SO₄)₃).

Daneben können der Lösung 4 Nährstoffe für die Mikroorganismen zugesetzt sein. Es handelt sich dabei zweckmäßigerweise um (NH₄)₂SO₄, KCl, K₂HPO₄, MgSO₄, Ca(NO₃)₂.

Die Temperatur der Lösung 4 wird mittels einer (hier nicht gezeigten) Heizvorrichtung auf einer Temperatur im Bereich von 30 bis 40°C gehalten. Mit dem vorgeschlagenen Verfahren gelingt es, Schwefelverbindungen aus dem Biogas mit einem hohen Wirkungsgrad zu entfernen. Das aus der Abführöffnung 13 austretende gereinigte Biogas weist bei geeigneter Verfahrensführung Schwefelwasserstoffkonzentrationen von < 100 ppm auf.

### Bezugszeichenliste

- 1: Reaktor
- 2: Trägerkörper
- 3: Stützelement
- 4: Lösung
- 5: elementarer Schwefel
- 6: Entnahmeleitung
- 7: Ansaugleitung
- 8: Pumpe
- 9: Steigleitung
- 10: Ring- oder Verteilerleitung
- 11: Düse
- 12: Zuführöffnung
- 13: Abführöffnung

## Patentansprüche

1. Verfahren zur Entfernung von schwefelhaltigen Verbindungen aus Biogas, bei dem das Biogas durch einen mit halotoleranten Mikroorganismen besiedelten Trägerkörper (2) geführt und der in den schwefelhaltigen Verbindungen enthaltene Schwefel zumindest teilweise durch die Mikroorganismen überwiegend zu elementarem Schwefel (5) oxidiert wird,
**dadurch gekennzeichnet, dass**
der Trägerkörper (2) zum Abführen des elementaren Schwefels (5) mit einer wässrigen, Sulfat- und Eisenionen enthaltenden Lösung (4) gespült wird.

2. Verfahren nach Anspruch 1, wobei als halotolerante Mikroorganismen eine Mischung von vorwiegend chemoautotrophen und chemoheterotrophen Bakterien verwendet wird.

3. Verfahren nach einem der vorhergehenden Ansprüche, wobei als wässrige Lösung (4) eine saure Lösung mit einem pH < 6 verwendet wird.

4. Verfahren nach einem der vorhergehenden Ansprüche, wobei die wässrige Lösung (4) auf einer Temperatur im Bereich von 20 bis 45°C gehalten wird.

5. Verfahren nach einem der vorhergehenden Ansprüche, wobei die wässrige Lösung (4) im Kreislauf über den Trägerkörper (2) geführt wird.

6. Verfahren nach einem der vorhergehenden Ansprüche, wobei die wässrige Lösung (4) im Gegenstrom zum Biogas geführt wird.

7. Verfahren nach einem der vorhergehenden Ansprüche, wobei ein aus Kunststoff hergestellter Trägerkörper (2) verwendet wird.

8. Verfahren nach einem der vorhergehenden Ansprüche, wobei der Trägerkörper (2) intermittierend gespült wird.

9. Verfahren nach einem der vorhergehenden Ansprüche, wobei das Biogas nahezu mit Wasserdampf gesättigt ist.

10. Verfahren nach einem der vorhergehenden Ansprüche, wobei dem Biogas Luft oder Sauerstoff beigemischt wird.

11. Verfahren nach einem der vorhergehenden Ansprüche, wobei der elementare Schwefel (5) aus der Lösung (4) entfernt wird.
